Europäisches Patentamt

European Patent Office

Office européen des brevets

(11) Publication number: **0 079 741**
**B1**

# (12) EUROPEAN PATENT SPECIFICATION

(45) Date of publication of patent specification: **21.12.88**

(21) Application number: **82305935.7**

(22) Date of filing: **08.11.82**

(51) Int. Cl.⁴: $G\ 11\ B\ 7/24$

(54) Archival recording media with improved information layer and associated substrate.

(30) Priority: **09.11.81 US 319466**

(43) Date of publication of application:
**25.05.83 Bulletin 83/21**

(45) Publication of the grant of the patent:
**21.12.88 Bulletin 88/51**

(84) Designated Contracting States:
**BE DE FR GB IT NL SE**

(56) References cited:
**EP-A-0 004 432**
**EP-A-0 083 396**
**GB-A-2 061 594**
**GB-A-2 079 031**
**APPLIED PHYSICS LETTERS, vol. 38, no. 11, 1st June 1981, pages 920-921, American Institute of Physics, New York, USA A.E. BELL et al.: "Reversible optical recording in trilayer structures"**

**CHEMICAL ABSTRACTS, vol. 73, no. 22, 30th November 1970, page 394, no. 114995r, Columbus, Ohio, USA A.L. HARRIS et al.: "Continuous-wave laser recording on metallic thin film" & IMAGE TECHNOL. 1970, 12(3)**

(73) Proprietor: **UNISYS CORPORATION**
**Burroughs Place**
**Detroit Michigan 48232 (US)**

(72) Inventor: **Lee, Neville**
**3472 Avenue Ladera**
**Thousand Oaks California 91362 (US)**
Inventor: **Labudde, Edward V.**
**3401 Daniel Street**
**Newbury Park California 91320 (US)**
Inventor: **Chao, Shiuh**
**14010 Cerise Avenue**
**Hawthorne California 90250 (US)**
Inventor: **Labudde, Robert A.**
**821 Haileah Drive**
**Virginia Beach Virginia 23404 (US)**

(74) Representative: **Kirby, Harold Douglas Benson et al**
**G.F. Redfern & Company Marlborough Lodge 14 Farncombe Road**
**Worthing West Sussex BN11 2BT (GB)**

(56) References cited:

JOURNAL OF APPLIED PHYSICS, vol. 53, no. 5, May 1982, pages 3438-3443, American Institute of Physics, New York, USA A.E. BELL: "Recording mechanisms in antireflection trilayer structures"

IBM TECHNICAL DISCLOSURE BULLETIN, vol. 13, no. 10, March 1971, pages 3001-3002, New York, USA M.H. BRODSKY: "Multilayer memory elements for beam addressable memories"

IEEE Journal of Quantum Electronics, Vol. QE-17, No. 1, Jan. 1981, pages 66-77

Handbook of Thin Film Technology, McGraw-Hill 1970, pages 1-113 to 1-116

Image Technology, April/May 1970, pages 31-35

## Description

### Cross reference to related specifications

This Specification contains subject matter common to EP—A—79 229 and EP—A—79 231. EP—A—79 231 is concerned with a method of writing data in a gold film without bulk melting, interruption or deformation of the film and EP—A—79 228 is concerned with an optical store utilising this method.

The present invention relates to a method of depositing a gold film on a substrate.

### Introduction, background

Optical storage of digital data is a relatively new technology, concerned with the storage and retrieval of digital information using optical techniques, using a special related (ODD, "optical digital data") medium, such as an ODD disk. By analogy such data is conventionally stored on magnetic media like tapes or disks commonly used with high speed digital computers today.

This disclosure relates to analogous optical media and associated read/write techniques and apparatus which are adapted to record and read-back the digital information using a focused beam of prescribed radiation energy, especially with low power laser equipment.

As workers well know, success in designing and operating such a system depends greatly on the storage medium. Workers in the art have, for some time now, pondered how to develop a satisfactory ODD disk medium, especially one adapted for low power lasers presently available and most practical. This invention teaches a practical ODD disk for this purpose, one adapted for reasonably long stable archival-life (e.g., on the order of 10 or more years) and use for record storage in high speed computer systems of today.

—Laser recording media, generally:

Now, requirements for such ODD media are stringent; e.g., involving high bit density and cost-effective information storage at satisfactory rite/read rates; especially using low-powered lasers. (Workers recognize the simplicity and power of such laser implementation, where one need only modulate and deflect a laser beam for read/write operations). In related applications (e.g., video disk recording) workers have used lasers and, for certain aspects thereof, have suggested media using a metal film as an "information layer", this layer being softened, melted or vaporized (e.g., thermally-ablated) by a write-laser beam sufficient to form a "void" (a pit, hole, bubble, etc., or other deformation) in the layer as the "bit". Such a film may be coated on the surface of a rotating disk.

Many workers have felt that such laser recording is promising for computer records of various kinds; e.g., the mentioned ODD media. They have predicted that practical systems await media responsive to low-power laser writing and that this in turn depends whether one can find such an information layer (material) able to be melted (or vaporized, etc.) at current practical low-power levels. This may also depend on the radiation efficiency of the associated system and on the thermal regime surrounding the layer (e.g., see Bartolini article cited elsewhere).

Thus, workers have looked for such laser recording materials which exhibit high thermal efficiency (a measure of how much of the heat generated at the recording site remains sufficiently localized to allow "pit" formation), and have long sought-out recording materials with a low melting point and low thermal diffusivity (tellurium, lead, bismuth and indium are examples).

And, since workers prefer to use low-power lasers for such recording (e.g., to enhance the operating life of a laser and minimize its cost and size), it has seemed even more desirable that the metal chosen for such an information (absorber) film have an "outstandingly-low" melting point ("adequately-high sensitivity") so that the desired "void" may be formed with minimal laser power.

—Te Absorber films:

Now, some workers have contemplated using Tellurium (Te) absorber films for this, or related, laser-recording for several reasons. Tellurium has an attractively-low melting point (about 450°C), conducts heat poorly and appears able to provide good sensitivity and S/N ratio; also, it is relatively convenient to deposit as a thin film. Bismuth is also commonly suggested for like reasons. And related alloys (e.g., as Te-Ge, Te-As-Se and Bi-Se) have been suggested as of interest.

Tellurium has a low write-threshold (energy)—when compared with Aluminum, for instance, as well as having a much lower thermal diffusivity—e.g., see U.S. 4,222,071 to *Bell*, et al; also see "Review of Optical Storage Media" by *Zech*, SPIE Vol. 177, Optical Information Storage, 1979, page 56 et sequ.; and also see "Optical Recording Media Review" by *Bartolini*, page 2 et sequ. of SPIE Vol. 123, "Optical Storage Materials and Methods", 1977).

For instance, this Bartolini article discusses such absorber films ("Ablative Thin Films") along with ten other optical recording means—including "Photo-polymers", that is organic compounds known to undergo photochemical changes which involve a shift in refractive index. The Zech article discusses absorber films arranged and used so that laser-writing forms a "hole" in the absorbing layer, this information being detected according to difference in reflectivity (similarly for Bell patent).

For such known "deformational recording", it appears that the thermal energy delivered by a high intensity radiation beam ("Write-Beam" of a Laser) is such that the "write-site" will soften, melt or ablate, in at least part of the beam cross-section. It is believed that surface tension then causes a "transverse cavitation" (see article by Zech cited above), leading in turn to the formation of a "pit" or hole, usually slightly elliptical. (See "Melting Holes in Metal Films for Real-Time, High Density Data Storage" by Cochran and Ferrier, SPIE Proceedings, August 1977, pages 17—31).

—Absorber films:

As one feature hereof, we have discovered a related kind of laser-recording can be done at temperatures well-below the melting point of such an "absorber". And, as a result we have also discovered that materials like gold, having a relatively high melting point and rather good conductivity—characteristics heretofore shunned by workers for the instant purposes—can yield a surprisingly good absorber film; one comparable in sensitivity to a "hitherto-preferred" absorber like Tellurium.

Of course, some have vaguely speculated that "high melting point" materials like Titanium and Gold (also platinum, rhodium, nickel, chromium, manganese and vanadium—e.g., cf. U.S. 4,285,056 to Bell) might be suitable for such "deformation" absorber layers. However, such speculations have paid no heed to the practical problem of "sensitivity" or to how a lower power laser can record on them as mentioned above. Or they have ignored the associated problem of high conductivity (where heat is readily conducted away from the recording site it is wasted, further degrading sensitivity—note a metal like gold has a high conductivity, whereas Ti and Te do not).

More astute observers have acknowledged that such "high-melting-point" metals are quite unlikely as absorber candidates (e.g. as expressed in cited U.S. 4,222,071 where the "low-melting-point" and poor conductivity of Te was heartily endorsed as yielding superior sensitivity and enabling one to record with a low-power laser. Thus, metals such as Au which are the REVERSE; i.e., good heat conductors and high melting point should, in theory, be the worst "absorbers"). Yet, the present invention teaches that just such metals as gold can be used and be superior to known absorbers—e.g., having a sensitivity somewhat equivalent to Te and much superior archival life.

This invention, further, teaches that such absorber films—contrary to everything taught in the art—evidently need form no holes or be otherwise deformed in the course of recording.

—Extended archival life:

A major advantage of optical data storage technology is the increased storage capacity it affords; e.g., the order of 100× that of magnetic tape. An optical data disk as here contemplated will be assumed as "non-erasable", with information stored permanently thereon for an extended archival life on the order of 10—15 years or more. Such extended life is a goal yet to be reached in the art, though workers would dearly love to do so. The present invention promifes media exhibiting this archival life, being especially adapted for optical mass memory and like applications.

By contrast, commonly-suggested absorber metals like Bismuth and Tellurium are known to slowly oxidize and otherwise degrade much too readily in the typical user environment; hence, they are poor candidates for such archival records (e.g., see cited article by Ash et al. 1981; and Zech article; also demonstrated by Example I below). Workers generally realize that Tellurium has particularly poor archival stability—i.e., its read-out quickly degrades with time. This degradation is accelerated in a high humidity environment; and is typically characterized by a rapid increase in overall optical transmission, presumably caused by a general oxidation of the metal, as well as by severe attack on selected bit sites, beginning at "defect sites" in the metal film. And Bismuth is similar.

This archival features is addressed by this invention, which teaches the analogous use of related films of gold, etc.—materials which are quite archival and are stable for extended use as computer information storage media, especially as for such optical data disk records for (as in Table I) computers.

According to the present invention there is provided a method of fabricating an optical recording medium having an optical reflectivity which is alterable in consequence of incidence onto a gold film of energy insufficient to melt said gold film; said method comprising depositing said gold film of said medium directly onto a substrate in the same operation and simultaneously with deposition of a gold layer on a separate device comprising a transparent layer, a quarter wavelength thick at a predetermined wavelength $(\lambda_o)$ and provided on an underlying reflective layer to complete a dark mirror optical trilayer structure; and further comprising the step of monitoring said tri-layer structure during said operation for first extinction of reflected light at said predetermined wavelength $(\lambda_o)$; said method including the further step of terminating said deposition of said gold film onto said substrate when said light reflected from said tri-layer structure is detected as being at or near said first extinction.

Thus, as a feature of novel application, we contemplate the use of such materials for records exhibiting the desired archival life, i.e., being extremely resistant to oxidation or like environmental degradation, during the contemplated use. Thus, no "loss" of recorded information will occur over extended (storage) life—i.e. reflectivity remains stable enough to "read". No practical storage medium or associated system is yet available which can provide extended archival life; especially where high sensitivity is also required (e.g., the sensitivity of Te or better). The invention teaches just this step forward.

United States Patent 4,285,056 discloses a method of recording optical data pits in an optical data storage medium by means of an incident laser beam. The disk or other optical medium comprises a tri-layer structure having a transparent spacer layer underlying a metal absorber layer which may include gold. The melting, or decomposition or sublimation temperature of the material of the spacer layer is considerably below the melting point of the gold absorber layer. The laser light heats the gold absorber layer which in turn causes decomposition, melting or sublimation of the adjacent spacer layer for the optical tri-layer to become distorted de-tuned and thus reflective by virtue of either bubble formation or pit formation in the overall structure. By contrast, the present invention seeks to provide improvement thereover by providing a method of creating a thin gold film on a glass substrate whose reflectivity can be altered without disruption to the film by simultaneous monitoring of the optical reflectivity of a tri-layer test piece whereon a gold film is simultaneously deposited for first extinction of reflected light from the test piece, at which point deposition on the glass substrate is terminated, the revelant gold layer having alterable reflectivity in its own right when heated to a temperature below its bulk melting temperature.

In an article by Bartolini & Bell, in I.E.E.E. Journal of Quantum Electronics, Vol. QE-17, No. 1 of January 1981 entitled "Diode Laser Optical Recording Using Tri-Layer Structures" on Pages 69—77 theeof, there is disclosed the reflective tri-layer structure well known in the art of optical disk recording wherein disruption to a tellurium absorber layer causes de-tuning of a tri-layer structure to render a portion of the tri-layer structure reflective by loss of its dark mirror property. By contrast the present application seeks to provide improvement thereover by disclosing a method of depositing a gold layer on a glass substrate where the reflectivity of the gold layer is simply altered in consequence of its having heated to a temperature below its bulk melting point. The method includes simultaneous deposition of the gold onto the substrate and onto a tuned tri-layer structure. The tri-layer test piece is monitored for first extinction of reflected light and the deposition of the gold film onto the substrate stopped at that point. The reflectivity of the gold film is altered upon incidence of low temperature energy without any disruption to the film.

In the publication "Image Technology", of April/May 1970, pages 31—35 (summarised in Chemical Abstracts Vol. 73, No. 22, 30th November 1970 page 394 No. 11499r) Harris, Chen and Bernstein jointly published an article "Continuous Wave Laser Recording on Metallic Thin Film" wherein irradiation of a gold layer around 50 nm thick on a glass substrate is disclosed. The present application provides a method whereby such thin films of gold can be laid down on glass in a simply controlled manner by depositing the gold layer simultaneously onto the glass substrate and onto an incomplete tri-layer structure having a quarter wave thick transparent layer at a preferred wavelength of 633 nm overlying a reflective layer. When light at the preferred wavelength reflected from the tri-layer structure first reaches or approaches a first instance of light extinction deposition of gold is terminated. The gold layer deposited thereby is in the region of 25 nm thick.

In the "Handbook of Thin Film Technology" published by the Magraw-Hill Book Company in 1970, authors Maissell and Glang disclose monitoring optical reflectance of thin films on a test substrate during their deposition onto a main substrate in order to measure the film thickness. There is also disclosed a method automatically to stop deposition of a thin film when it is an integral number of quarter wavelengths thick at a preferred light wavelength by stopping at a minimum of light reflectance. The method of optical monitoring described is stated as generally being unsuitable for metal films and applied primarily to transparent dielectric films. The present application discloses a method whereby optical monitoring may be applied to gold films and used automatically to terminate a deposition process by reaching a light reflecting minimum at the preferred wavelength, despite the gold film being substantially opaque to light at thicknesses in the region of a quarter wavelength. The method disclosed in the present application further allows that the controlled deposition of the gold film is achieved with a final thickness in the region of 250 nm with a preferred wavelength of 633 nm the gold film being only a fraction of the quarter wavelength thickness which is the minimum controllable thickness in the method disclosed in Maissel's and Glang's book. The present application discloses achieving these results by using as the test substrate an incomplete tri-layer structure having substantially a quarter wave transparent layer overlying a reflecting layer, rather than the plain substrate disclosed by Maissel and Glang.

The novel recording media taught herein will be generally assumed as meeting the foregoing criteria; and, where possible, as also meeting one or more of the "Target performance criteria" presented in Table I below. (See also "Optical Properties of Tellurium Films Used for Data Recording" by Ash and Allen, SPIE, Vol. 222, 1980).

TABLE I
(Target Media Criteria)

1. "High" Sensitivity:
—allow recording with low-power laser means. "Sensitivity" will be understood as minimum laser power needed for bit formation (change in spot reflectivity, akin to that resulting from formation of a hole, or other void or like change in medium, giving adequate read-out at contemplated recording rate).
With the invention, one may typically "write" with the order of 5—15 mW laser power for approximately 40—60 n.sec; —yet not degraded by read-out (e.g., on repeated playback).

1-A. High S/N: (adequate read-out):
Signal to noise ratio (for adequate read-out) on the order of about 30—40 dB or more.

2. "Archival Stability": (10+years life):
Able to be used or stored in "normal com puter environment" without dropping below

min. read-out for at least 10—15 years.

3. "Computer records":
   Assume capability to operate with present day high speed digital computers—e.g., with at least the same capabilities as today's magnetic disk storage equipment (e.g., bit density of about $10^6$ bits/cm² or better).

4. "Deposit-able":
   —suitable film(s) can be deposited on "commercial scale" and give repeatable, controlled characteristics.

5. Overcoat-ability:
   absorber film (e.g., up to a few mils thick) can be coated to mechanically protect it and defocus "surface dirt" without sacrificing above features, e.g., still give adequate read-out (preferably overcoat can also impede heat and contaminant-gases, etc. from absorber film).

Thus it is an object hereof to provide the foregoing, and other related, features and advantages. A more particular object is to do so teaching gold as such absorber (information) films. Another object is to teach such films exhibiting good sensitivity, even with low-power lasers; as well as extended archival life. A further object is to teach formation of such records apt for recording without need to generate "pits" or like voids in the information layer. Another related object is to do so without need to melt or significantly soften the information layer; i.e. developing "altered reflectivity" bits (pseudo-holes) while keeping the layer well below its melting point.

Brief description of the drawings

These and other features and advantages of the present invention will be appreciated by workers as they become better understood by reference to the following detailed description of the present preferred embodiments, these being considered in conjunction with the accompanying drawings, wherein like reference symbols denote like elements:

Fig. 1 provides a cross-sectional view of an idealized portion of a prior art recording medium;

Fig. 2 provides a similar view of a preferred recording medium for use in a method in accordance with the present invention; and

Fig. 3 is a plot of absorber reflectivity vs. gross temperature.

Detailed description of the invention

"Te Example"; Tellurium absorber; (prior art):

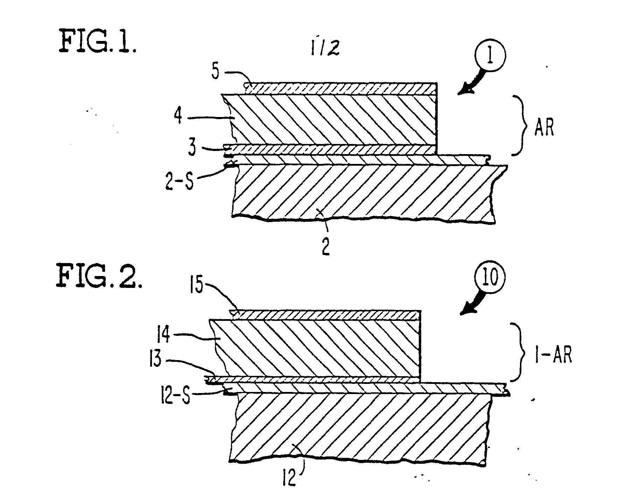

Fig. 1 is a schematic illustration of an idealized cross-sectional view of an optical recording medium 1, generally along the lines of what is presently taught in the literature for Tellurium (e.g., see Ash article). Medium 1 comprises a support 2 on which is provided an "anti-reflective" substrate AR and, on AR, an information layer ("absorber") 5.

Preferably substrate AR comprises a "reflector" layer 3, on which a transmissive "spacer" layer 4 is laid. Layers 3 and 4 may be characterized as, respectively, primarily-reflective-transmissive at the contemplated read/write wavelength, Layers 3, 4, 5 will be understood as providing a multilayer low-reflecting (anti-reflection) design over most of the visual spectrum as known in the art (see Ash article).

Support 2 preferably comprises a polished aluminum disk of the type presently used in digital magnetic recording for computer disk drives, coated with a subbing layer 2-S adapted to render a satisfactorily-smooth, flat surface for deposition of reflector layer 3. A radiation (laser) beam of prescribed energy and wavelength may be understood as applied to medium 1 from a laser source L, so as to establish a "hole" or like "deformation" on layer 5 as "writing" takes place, e.g., at site "v" shown in phantom.

Prior art record 1 in Fig. 1 will be understood as undertaken and described principally to provide a means of comparison and distinction for the invention embodiments in the following examples. And, except as otherwise specified, all materials, methods and devices and apparatus herein will be understood as implemented by known expedients according to present good practice.

Here, the metallic recording film 5 will be understood as deposited on the "transparent" dielectric spacer 4, with both thicknesses selected to yield unknown low-reflectivity structure (e.g., as in Bartolini article, where less than 3% reflectivity with 5 nm Ti on 80 nm $SiO_2$ spacer recording at =488 nm). Then, where each "pit" (bit) is recorded, this "anti-reflective" background will be disrupted such as to yield "bits" adapted for high-contrast read-back. And where the recording wavelength is shifted, the spacer thickness is readily altered to give like results.

Workers will recognize that in certain cases the reflector film may be eliminated (e.g., in favor of a "dielectric mirror") and that spacer 4 may comprise other materials/structures (e.g., several layers of like material that is also more insulative thermally).

Thus the coating parameters here will be understood as selected to preferably provide an "anti-reflective" condition for the so-coated disk at the contemplated recording frequency when the write beam is focused on this absorber layer. [Regarding such see: *"Anti-Reflection Structures for Optical Recording"* by Bell and Spong, Journal of Quantum Electronics, Vol. QE 14, No. 7, July 1978; and for general prior art, see exemplary articles: "Optical Disk Systems Emerged", IEEE Spectrum by Bartolini, et al, August 1978, page 20; and Optical Recording Media Review" BY Bartolini, SPIE Proceedings, Vol. 123, 1977, ("Optical Storage Materials and Methods", page 2).

Preferably, deposition proceeds until the reflectance of layer 5 reaches "effective zero" or another predetermined minimum-reflectance level. As workers know, this may be done empirically, or by continually monitoring the flectance of the absorber film as 5 is deposited [and see deposition techniques described by Zech in his cited article].

Thus, one may vapor deposit an opaque layer 3 of aluminum onto 1c Support 2 (all optical characteristics taken relative to contemplated R/W laser spectrum of 400—900 nm). Then, a layer 4 of $SiO_2$ (or like "transparent" dielectric) is vapor-deposited on layer 5 to a prescribed depth, this depth related to $\lambda_o$, the operating wavelength (—here, preferably slightly less than either 1/4 $\lambda_o$ or 3/4 $\lambda_o$). Atop layer 4 is vapor deposited the absorber film 5 to a depth which produces the initial minimum (near-zero) reflectance (see below).

The reflectivity of the record medium 1 will be understood as modified at each bit-site "v" by the radiation beam from write-laser L, so that, upon detection with a suitable means, the "void areas" v (i.e., "bits") may be distinguished as relatively "high reflectance spots" from the low reflectance "non-void" surrounding them, as known in the art.

For instance, U.S. 4,285,056 to Bell describes a like medium where information is recorded as openings in both the absorber and transmissive spacer layers, with the lengths of the openings and of the unexposed intervening areas being varied along a specific information track to convey frequency information. This patent also calls-out various materials (e.g., among them titanium, rhodium, platinum, gold, nickel, chromium, manganese and vanadium) to be deposited using standard evaporation or electron beam evaporation techniques.

However, Bell diverges from what is contemplated here in requiring that his spacer layer be heated by the write beam—heated sufficient to either be itself ablated-away, i.e., to otherwise develop a void within itself) or else to be decomposed or sublimed and then out-gas sufficient to cause a "bubble" under a super-layer (e.g., of gold)—yet in the present case, essentially no energy is to be absorbed by the analogous spacer layer.

—Preparation of absorber layer 5; (Fig. 1):

Absorber layer 5 preferably comprises a relatively thin layer of Tellurium which is vapor deposited onto spacer layer 4 (on a relatively flat—~≤1/20λ—record-surface thereof), preferably to a depth determined by monitoring this "tri-layer coating" to yield the "initial minimum reflectance", (typically, one to several tens nm). The Te was so evaporated in a high vacuum chamber using a refractory metal boat for a source [1.2 m box type coating chamber used in Ash article]. Tellurium is a "low melting point/poor conductivity" metal commonly preferred by workers because it is felt to exhibit superior sensitivity, thus minimizing required (threshold) laser write-power.

For instance, this is expressed in U.S. 4,222,071 to Bell and Bartolini, where similar tellurium films were characterized as requiring laser-power on the order of 15+mW for writing thereon (to achieve adequate read-out, about 20% optical efficiency being assumed—the goal being to permit recovery of recorded video signals with about 45—50 dB S/N, or 'broadcast quality" read-back).

[They also specified a solid state Ga-AL-As injection...laser, apparently applied in a continuous beam one (1) in micron in diameter at the record surface, the while kept moving past this beam].

U.S. 4,222,071 stresses that the absorber must be a "low melting point metal" like Te (as well as being deposited in a "continuous film", and not as "microscopic agglomerates").

Substrate 2 comprises a flat, aluminum plate polished to desirable flatness and coated with subbing 2-S to accommodate deposition of thin reflector layer 3 (high reflectivity over at least the "working portion" of the contemplated radiation spectrum). About 60—90 nm of aluminum vapordeposited has been found satisfactory.

The spacer 4 is likewise deposited atop reflector 3. Spacer 4 is a dielectric material which is relatively transparent to the "working portion" of the laser spectrum and preferably also exhibits good thermal properties (e.g., good insulator, low thermal capacitance). About 110 nm of vapor-deposited $SiO_2$ (silicon dioxide) has been found satisfactory for the subject purposes (e.g., write/read at λ=633 nm). The Tellurium absorber layer 5 will be understood as highly absorptive of the contemplated recording laser spectrum (e.g., typically 25% absorptive; 30% reflective, with about 45% of the beam energy transmitted (for tri-layer cancellation, must transmit more than reflect).

The thickness of absorptive layer 5 depends on that of spacer 4 and should be minimal, only that sufficient to render the "Dark Mirror effect" known to workers—being deposited on its anti-reflectance substrate, only until reflectance is first minimized.

Workers would view the Te absorber 5, with its low melting point and a relatively short thermal diffusion length (poor conductivity—thus helping concerve incident laser energy) as a good, high-sensitivity material. When a write beam from laser source L falls upon site "v" of layer 5, a small portion of its energy will be reflected, a small portion absorbed and a large portion transmitted—the transmitted portion being reflected back by layer 3 to be (principally) absorbed in layer 5. Hence both incident and reflected energy will heat film 5, minimizing transmission losses (deposition of 5 to yield "tri-layer").

—Results:

For instant purposes, "Sensitivity" will be understood as: characterizing the write-energy $E_w$ necessary to change reflectivity (or a like read-out characteristic) sufficient to give the desired minimum read-out.

The intensity and time exposure of the focused Write-Beam will be understood as sufficient to so elevate the temperature of absorber layer 5 as to cause the indicated change in reflectivity (at v sites) giving the desired read-out quality, etc. (e.g., so that adequate contrast, S/N ratio) may be realized, as understood by workers in the art. —cf. an exemplary S/N ratio of 40—50 dB (peak-to-peak signal vs. RMS noise) for a bandwidth of about 15 MHz.

Here, test recording is performed with a gas (1—10 mW He-Ne) laser beam operating at 633 nm, with recording exposure from 30—470 n. sec., (usually 10 mW, 40 n. sec. or about 400 pJ—this intended to yield minimum adequate read-out, or about 40+dB S/N, when read at lower power; e.g., viz: 150—500 pJ/cm², pJ=$10^{-12}$ watt-sec. or Joules). With the same or similar laser equipment. Note: for this contemplated setup, assume laser focused bit site ~1/2—1 micron diameter, need for write-pulse about 40 n. sec. long [60 n. sec. from rise to fall—this also accommodating disk rpm~1800 and galvo-mirror focus characteristics].

The subject record 1 is so-recorded upon. It is found (relating to comparable situations in the literature, etc.) that relatively low-power laser pulses can melt the Te film sufficient to yield the well-known "craters" or "holes" and give good read-out (e.g., bit reflectance of ~50% vs. background of 1—3% at λ=633 nm)—however with quite a bit of "noise" too.

Such "bit holes" will be seen to be actual voids (e.g., see photos in Ash article where 2—10 mW, 100 n. sec. laser pulse recorded such "holes" in like Te films—there, it was assumed that a 25 nm film of Te used in the reflective mode produced 57% reflectance, 6% transmittance, 37% absorptance at 450 nm). However, despite the fact that such Te films are deposited as a continuous layer, the formation of the "bit holes" (v) is described in the literature as accompanied by a surrounding rim—and it is thought that this rim is responsible for (much of the mentioned "noise".

Evidently one needs a certain MIN. Write-Energy $E_w$ within a certain minimum rise-time (e.g., with this laser, etc. about 10 mW within 40 n. sec. to render adequate "holes" (e.g., higher power delivered too slowly can allow heat-at absorber to leak away; thus no "bit" is written).

Such "holes" or "pits" are indicated by the hole at "v" in Fig. 1. At least some of the absorber material 5 is then evidently softened and displaced at that bit-site, sufficient to reduce its thickness there and so give increased reflectivity (at least that is what the art conventionally teaches, e.g., see Ash article and cited U.S. 4,222,071).

Such a spot may be read-out with means known in the art, e.g., with a similar laser at lower power (e.g., above described laser at 3 mW), the increase in reflected energy received (at a suitable photo-detector) is observed to yield on output signal representing the recorded bits, these being readily distinguishable from background—this read-energy being insufficient to "erase" or disturb the so-recorded bits, of course. [Note: read-out at a frequency $f_R$, where "pit-depth" introduces a phase change vs. light reflected at surface of Te such as to maximize contrast therewith].

—Archival stability:

We found that the archival stability of this "Te record: was extremely poor, as the literature has noted (e.g., see Ash article re oxidation, etc.). For instance, under known temperature-humidity cycling, record 1 will be found (using no overcoat on layer 5) to lose 50% of its reflectivity in about 50 weeks, evidently mostly via oxidation, etc. The Te film of Example I will be found characterized by a rapid increase in overall optical transmission after such "aging". This is presumably caused by a general oxidation of the metal as well as severe selected site-attack beginning at "defect sites": in the metal film. (cf. analogous test per MIL SPEC #810-B).

This is grossly inadequate for the mentioned "archival memory" requirements (at least 10—15 years exposure to normal computer operating/storage conditions; see Table I).

Embodiment Examples

The following Examples, I, II, III, III-A and V are given by way of teaching some exemplary uses and advantages of "low temperature" absorbers and Example IV describes a method according to the invention.

—Example I; Au absorber; (Fig. 2):

The operations, materials, methods and structure of the "Te Example" (Fig. 1) described above are essentially duplicated here, in a "gold record" 10, except as otherwise specified.

Record 10 will be understood as comprising a substrate-support 12 on which an "anti-reflective" substrate 1-AR is laid (preferably comprising a reflector layer 13, with a transmissive spacer layer 14 laid upon 13) with an absorber film 15 placed atop substrate 1-AR (spacer 14 thereof). Here, absorber 15 comprises a film of gold deposited like the Te film in the "Te Example", to a similar depth by essentially similar means. The underlying spacer layer 14, reflector layer 14 and substrate 12 are (at least functionally) otherwise the same as in "Te Example" and will be understood as also functioning as a "tri-layer".

That is, this gold absorber film 15 is preferably formed (as in "Te Example") by vapor depositing gold on the surface of $SiO_2$ spacer 4 until the well known "tri-layer" is rendered (i.e., until surface-reflectivity of 5 first goes to zero or "near zero").

—Results:

The results are most surprising, especially in light of expected properties and as compared with conventional media like the Te absorber described in "Te Example". That is, record 10 was recorded-upon, read-out and evaluated, with its sensitivity, etc., measured, as in the "Te Example"—i.e., using an He-Ne laser system of the type mentioned. The so-written bit-sites exhibited a like increase in reflectance and higher output signal as with Te. As detailed below, one finds this yields a record with fine archival stability, unexpectedly-high sensitivity, high S/N and surprisingly low write-energy, and low write-temperature—plus overcoat tolerance; yet one observes only "reflectance transitions" with no "pits" or like deformation of the absorber.

—"Archival stability" (resistance to environmental degradation): was found to be far superior to that of the Tellurium record in the "Te Example" (and to that of any known tellurium "pit" records); for instance measurements of change in optical reflectivity after "aging" (under a cycled elevated temperature/high humidity environment) indicate that this alloy is considerably more stable then closely-similar Tellurium films. And workers are well aware that gold is equal to such "archival" conditions as required here. It is projected that such "gold records" can maintain adequate read-out (30+dB) for the order of ten (10) years or more of the contemplated storage and use.

—Unexpected "high sensitivity":
We found to our great surprise that such a thin gold alloy absorber can be approximately as "sensitive" as a Tellurium absorber (e.g., about 1/2 that of "Te Example" is common)—e.g., that information can be recorded in the 5—15 mW, 10—100 n. sec. power range (or 100—1000 p.J.)—specifically about 5 mW for as little as 40 n. sec. is seen to "switch reflectivity"; some samples even "switch" in about 10—15 n. sec. at 1—2 mW; others in less time at 10 mW—all yielding satisfactory read-out (e.g., 30—40 dB S/N, etc.). This is really astonishing—it is many times the value our theory predicted and is really contra to what the literature conventionally teaches!

That is, compared with known accepted "good absorbers" like Te, gold has such a relatively high melting point (about 1100—1200°C vs. about 450°C for Te) and such superior heat conductivity (that of Te is notoriously poor), that one would have to expect a gold absorber to exhibit sensitivity far inferior to that of Tellurium. For instance, the literature extols Te as having sensitivity which is vastly superior to Titanium, and Titanium has a high melting point like gold but is as poor a heat conductor as Te—thus how can gold be a better absorber than Titnium?? One reason (see below) may involve the very different mechanism for such "bit formation", i.e. whereby, unlike Te, etc., no deformation (e.g., pit, bubble, etc. formation) is involved here; but rather something else serving to change reflectivity when subjected to such a write-beam, and evidently requiring considerably less write-energy.

—Low temperature recording:
A major surprise is that the indicated "reflectance transition" occurs at such low (write-)power levels and evidently at such low temperatures [see below, Examples show that this occurs well-below golds melting point]. Thus surprisingly high sensitivity, in turn, allows one to turn to "high-melt" material like gold which has superior archival properties, alleviating risk of corrosion, degradation over extended life.

—Writing "transitions" without "deformation" of absorbers:
An even greater surprise ensued when the so-written record (with low power, low T°) was examined for the usual "pits" ("holes" or like deformation as with Te films). After careful investigation (e.g., with scanning electron microscope), no evidence of "pits" could be found!—and results were found that were unexplainable by pit formation! This was bizarre and most unexpected; all known absorber films of this type, when so written-upon (i.e., suitable laser energy, sufficient to yield significant read-out reflectance differences, as here), have definitely exhibited "pits" (i.e., displacement of absorber material at bit-site)—as workers well know. Example I is a case in point.

This is so unorthodox that many of our coworkers refused to believe it for sometime. But to date, having found no convincing evidence of "pits" (a negative fact to be sure—subject to possible explanation later), we must believe that there were none. It is possible, of course—indeed likely—that greatly increased write power will generate such a hole or pit. And, one cannot be sure that present "deforming materials" like Te will not reset similarly under the "right" conditions.

Our best theory (as yet not fully worked out) is that, without forming any such "pits", this thin (pure gold) absorber film is so deposited (e.g., on tri-layer) as to be capable of being radically changed somehow by the usual write-beam so as to exhibit a significant difference in reflectance (vs, background)—almost exactly as her known absorbers like Te have done in the course of forming "pits". We characterize this as "reflectance transition" for lack of a better term.

We are not yet sure of the casual mechanism—e.g., whether it results from some solely-internal change in phase, or in crystallinity, in density, etc. (perhaps akin to the photo-polymers in Bartolini article cited above), or whether one or several interior micro-sites are so formed.

This strange absence of "deformations" and apparent lack of melting, coupled with the unexpectedly low write-energy ($E_w$), leads us to infer that the so-written "reflectance transitions" occur because of internal, relatively microscopic changes in the gold film—as opposed to the conventional "macroscopic" changes like pit forming (and one can infer that the latter reasonably should require more write-energy). We theorize that such transition are peculiar to "ultra-thin" films of this type (on the order of 100 to several hundreds $Å ± 50\%$). One could further surmise that such films exhibit special properties unrelated to those of the "bulk metal"—properties attributable (in part at least) perhaps to the relative prominence of metal substrate bonds (e.g., Au-$SiO_2$ bonds vs. Au-Au bonds). And we expect that for thicker films (more like "bulk metal") more write-energy would be required—if indeed such "transitions" are possible (e.g., Au-Au bonds predominate and are stronger).

Now this new type of "phase transition", or rearrangement of absorber structure under mild heating, may result (at least in some cases) when the absorber is deposited as an ultra-thin "semi-continuous" film which the heat of the write-beam can coagulated into colloid (more discontinuous) form. Such a result might be analogized to the "ruby glass" phenomena known in the glass industry [see "Coloured Glasses" by W. A. Weyl published 1951 (Reprinted) by Dawsons of Pall Mall, Londen 1959]. This could, in effect, "optically eliminate" absorber 15 of the tri-layer, eliminating the associated "phase-cancellation" and letting reflectance from reflector 13 only, take-over [e.g., "colloid-islands" with diameter of a few Å vs. beam 1000× wider].

In any event, workers will certainly welcome the availability of such novel gold absorbers, not only because of their evident ease of manufacture (deposition, handling) by well-known methods and properties, and their evident superior archival stability and aptness for use in computer disk records (e.g., per Table I), but also because writing such "transitions" implies special unique advantages—e.g., dispensing with need to melt absorber, or to "roll aside" absorber mass to form a "pit", absence of typical "pit-rim" giving rise to "read-out noise", and associated unconcern with constrictive effects of over-coatings (e.g., a protective film covering the ordinary pit-forming Te absorber will be expected to "squeeze" the pit site sufficient to retard pit-formation); also, the associated reduction in write-energy and record temperature—all these promising the ability to "laser-write" with much less energy and to write smaller bits! Workers will welcome a system whereby bits may be recorded without the intense heat and macroscopic changes inherent in the well-known pit formation.

—Overcoating; effects:

The "Te Example" was also run with a thin overcoating of SiO (100 nm, vapor deposited) on the Te film. This was not really a true, functional overcoat of the kind workers have suggested (e.g., several mils thick, to permit record handling, without scratching to "defocus", surface dust, grime, etc.; to impede vapor entry, e.g., water, oxygen; to further conserve writing heat, etc.); but did effect "pit formation", raising required write energy to about double! (Possibly because it so "squeezed" Te film at pit-site as to impede associated displacement of Te material there). And workers are aware that such "deformation media" (as with pits in Te, bubbles in other metals, etc.) cannot tolerate such an "overcoat" (e.g., read-out signal destroyed; sensitivity raised).

Significantly, when an Au film as in Example I was similarly over-coated, no such effect was seen (e.g., some write-energy to generate "pseudo-pits"). As workers will see this reinforces the theory that the instant "transition" mechanism is quite novel (no movement of Au metal to form "pit", etc.) and amplifies the attractiveness of such absorbers (tolerances to overcoating is very, very important). Evidently, the involved "reflectance transition" is more tolerant of the usual overcoat. For instance, coating such a pure gold tri-layer with several mils of transparent Teflon doesn't radially disturb its record properties (e.g., sensitivity, read-out drop only a bit—vs. with Te, cannot record at all, at this power level). This compatibility of gold absorbers with such elastomeric insulative overcoatings is a very welcome feature. To our knowledge, this is the first such absorber that accepts such overcoatings while maintaining good record properties (sensitivity, S/N, archival, etc.).

As another feature hereof, and based on the foregoing and other Examples, one would infer that such an ultra-thin absorber film (of gold) is probably not behaving as predicted from reported "Bulk" (Gold) properties (e.g., thermal conductivity—e.g., radical conductivity cannot be significant). The discovery of such "thin film properties" is significant and is further mentioned below.

By way of showing that these "transition bits" (reflectivity-switching) occur well-below the melting temperature (of gold) and involve no "pits" or other deformation, Examples II—V follow.

—Example II; Gross heating:

The record of Example I is essentially replicated with pure gold deposited on the same tri-layer to same depth as Example I. However, rather than subjecting it to a laser write beam, the record is simply heated, rather crudely, at several spots with a common soldering iron. The spots are heated to a "transition temperature" (-range, considerably below the melting point or the softening point) where a radical change in color is observed (extreme change in gross "eyeball-reflectance" occurs rather suddenly).

That is, we slightly heated spots on this "pure gold" absorber sample, with the solder iron heated to about 550°C (estimate its maximum T° of iron, and is well below gold's melt point of 1100—1200°C)—and we found to our surprise that the "eyeball appearance" of each so-heated spot changed very radically (from a relatively low-reflectivity dark blue, to a high reflectivity "white-pale violet). Again, examination failed to find any evidence of "pits".

—Example III; as II, but Au/Pb:

Example II is repeated, however with a gold-lead alloy replacing the pure Au. The results are essentially the same except that the occurred a bit faster (at lower T° as sample warmed-up). This strongly suggests that various gold alloys can be made to yield these inventive results (high-sensitivity; "write" with very low power and well below melt point, etc.).

Another like sample (Au/Pb) is made and is written, then read-out as in Example I. Results were much the same as Ex. I (pure Au) except that sensitivity was a bit higher (higher than in "Te Ex." too!).

—Example III-A: I; but Au/Sn:

Ex. I is replicated, however substituting an Au/Sn alloy for the pure gold absorber film. Results were quite similar to Ex. II, with a minor drop in sensitivity.

The "alloys" in Ex. III and Ex. III-A are, really separate Au, Pb or Sn layers vapor-deposited (as in Ex. I) individually and sequentially [e.g., Au, then Pb, then Au, then Pb, then Au to a total depth giving "initial zero reflectance" as in Ex. I]. Thus, they are better characterized as "laminate-mixtures".

—Example IV; Au, on glass only; torch-heating:

Example I is repeated except that, instead of a "tri-layer" substrate, only a glass sheet is used. The same deposition is carried out, with the Au film vapor-deposited to the same "tri-layer depth" (e.g., in common chamber with a second tri-layer sample, keeping deposition time the same for both samples, while monitoring tri-layer reflectance as in Ex. I).

Results were closely similar (color change at estimated 450°C, with radical change in reflectivity occurring; however heating was with a "blow torch".

The temperatures in Examples II, III and IV were estimated, not precisely tracked. This was remedied in the Example V below.

—Example V: as I, oven heating, T° monitored:

Example I is replicated (pure Au on tri-layer). However, the sample is heated in an oven (not laser written) and its temperature carefully monitored (with thermocouple) along with its reflectance (5 mW He-Ne laser at 6330 Å and associated detector and read-out means).

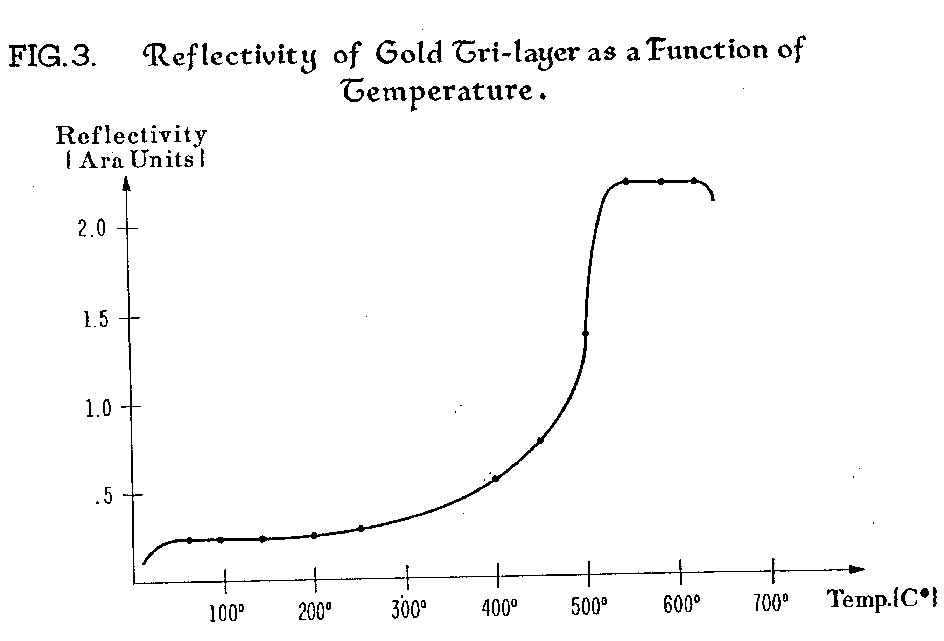

Fig. 3 is a resultant plot of oven/record temperature vs. reflectivity (reflectance scale arbitrarily chosen—#0.5 corresponds to ~5% refl.; #20 to ~90% reflectance). This plot confirms that such "mild heating", kept well below gold melt T°, will, of itself, induce a radical change in reflectance; cf gradual change from about 200—400°C; then sharply from 400—550°C; (here, entire sample surface is heated—no melting observed).

Workers will agree that the gross macroscopic color transitions observed in Ex.s II—V above, under such "mild" (non-melting) heating certainly confirms that such "reflectance transitions" in a gold film have nothing to do with forming "pits" or any other deformation.

This is exciting on seal counts—e.g., promising "low-T° writing" (low $E_w$), elimination of read-out noise associated with the ridges that usually form around such "pits", higher bit density, ability to "so-write" on noble and like "archival metals with a relatively high melting point.

## Claims

1. A method of fabricating an optical recording medium (215) having an optical reflectivity which is alterable in consequence of incidence onto a gold film of energy insufficient to melt said gold film; said method comprising depositing said gold film of said medium directly onto a substrate in the same operation and simultaneously with deposition of a gold layer (5 or 15 or 115) on a separate device comprising a transparent layer (4 or 14 or 114), a quarter wavelength thick at a predetermined wavelength ($\lambda_o$) and provided on an underlying reflective layer to complete a dark mirror optical trilayer structure (2, 3, 4, 5 or 12, 13, 14, 15 or 112, 113, 114, 115); and further comprising the step of monitoring said tri-layer structure (2, 3, 4, 5 or 12, 13, 14, 15 or 112, 113, 114, 115) during said operation for first extinction of reflected light at said predetermined wavelength ($\lambda_o$); said method including the further step of terminating said deposition of said gold film onto said substrate when said light reflected from said tri-layer structure (2, 3, 4, 5 or 12, 13, 14, 15 or 112, 113, 114, 115) is detected as being at or near said first extinction.

2. A method according to Claim 1 wherein said substrate is a glass substrate.

3. A method according to Claim 1 or Claim 2 wherein said operation is a vapour deposition operation.

4. A method according to any of the preceding Claims wherein, upon termination of said operation, said gold film has a thickness in the region of 25 nm.

5. A method according to any of the preceding Claims wherein said predetermined wavelength ($\lambda_o$) is 633 nm.

6. A method according to any of the preceding Claims wherein said energy is derived from a thermal source.

## Patentansprüche

1. Verfahren zur Herstellung eines optischen Aufzeichnungsmediums (215) mit einem optischen Reflexionsvermögen, das durch Auftreffen von Energie auf einen Goldfilm veränderbar ist, wobei diese Energie jedoch zum Schmelzen des Goldfilms nicht ausreicht; dadurch gekennzeichnet, daß das Aufbringen des Goldfilms des Aufzeichnungsmediums direkt auf ein Substrat in einem Arbeitsgang zusammen mit dem Aufbringen einer Goldschicht (5 oder 15 oder 115) auf eine getrennte Anordnung erfolgt, die eine transparente Schicht (4 oder 14 oder 114) mit einer Dicke von einem Viertel einer vorbestimmten Wellenlänge ($\lambda_o$) und eine darunterliegende Reflexionsschicht enthält, die insgesamt eine optische Dreischichtstruktur (2, 3, 4, 5 oder 12, 13, 14, 15 oder 112, 113, 114, 115) in Form eines Dunkelspiegels bilden; daß die Dreischichtstruktur (2, 3, 4, 5 oder 12, 13, 14, 15 oder 112, 113, 114, 115) während des ersten Arbeitsganges auf eine erste Auslöschung des reflektierten Lichts bei der vorbestimmten Wellenlänge ($\lambda_o$) überwacht wird; und daß das Aufbringen des Goldfilms auf das Substrat dann beendet wird, wenn für das von der Dreischichtstruktur (2, 3, 4, 5 oder 12, 13, 14, 15 oder 112, 113, 114, 115) reflektierte Licht die erste Auslöschung oder deren Nähe erreicht ist.

2. Verfahren nach Anspruch 1, dadaurch gekennzeichnet, daß das Substrat ein Glassubstrat ist.

3. Verfahren nach Anspruch 1 oder 2, dadurch gekennzeichnet, daß der Arbeitsgang ein Aufdampfungsprozeß ist.

4. Verfahren nach einem oder mehreren der vorstehenden Ansprüche, dadurch gekennzeichnet, daß bei Beendigung des Arbeitsganges der Goldfilm eine Dicke von etwa 25 nm hat.

5. Verfahren nach einem oder mehreren der vorstehenden Ansprüche, dadurch gekennzeichnet, daß die vorbestimmte Wellenlänge ($\lambda_o$) gleich 633 nm ist.

6. Verfahren nach einem oder mehreren der vorstehenden Ansprüche, dadurch gekennzeichnet, daß die Energie aus einer Wärmequelle stammt.

**Revendications**

1. Procédé de fabrication d'un support d'enregistrement optique (215) présentant un coefficient de réflexion optique modifiable lorsqu'on fait tomber sur un film d'Or une quantité énergie insuffisante pour faire fondre ce film d'Or; procédé caractérisé en ce qu'il consiste à déposer le film d'Or sur le support d'enregistrement directement sur un substrat, en même temps qu'on effectue simultanément, dans la même opération, le dépôt d'une couche d'Or (5 ou 15 ou 115) sur un dispositif séparé constitué par une couche transparente (4 ou 14 ou 114) d'un quart de longueur d'onde d'épaisseur à une longueur d'onde prédéterminée ($\lambda_o$) formée sur une couche réfléchissante sous-jacente pour constituer une structure optique triple couche de miroir noir (2, 3, 4, 5 ou 12, 13, 14, 15 ou 112, 113, 114, 115); et en ce que le procédé comprend en outre l'étape consistant à surveiller la structure triple couche (2, 3, 4, 5 our 12, 13, 14, 15 ou 112, 113, 114, 115) pendant cette opération pour détecter la première extinction de la lumière réfléchie à cette longueur d'onde prédéterminée ($\lambda_o$); le procédé comprenant en outre l'étape consistant à stopper le dépôt du film d'Or sur le substrat lorsque la lumière réfléchie par la structure triple couche (2, 3, 4, 5 ou 12, 13, 14, 15 ou 112, 113, 114, 115) apparaît, à la détection, comme étant à la première extinction ou au voisinage de la première extinction.

2. Procédé selon la revendication 1, caractérisé en ce que le substrat est un substrat de verre.

3. Procédé selon l'une quelconque des revendications 1 et 2, caractérisé en ce que l'opération effectuée est une opération de dépôt par vaporisation.

4. Procédé selon l'une quelconque des revendications précédentes, caractérisé en ce que, à la fin de l'opération, le film d'Or présente une épasseur se situant dans la zone de 25 nm.

5. Procédé selon l'une quelconque des revendications précédentes, caractérisé en ce que la longueur d'onde prédéterminée ($\lambda_o$) est de 633 nm.

6. Procédé selon l'une quelconque des revendications précédentes, caractérisé en ce que l'énergie est fournie par une source thermique.

# FIG.1.

# FIG.2.

FIG.3. Reflectivity of Gold Tri-layer as a Function of Temperature.